# EUROPEAN PATENT SPECIFICATION

(11) **EP 0 620 462 B1**
(45) Date of publication and mention of the grant of the patent: **21.07.1999**
(21) Application number: 94301842.4
(22) Date of filing: 15.03.1994
(51) Int. Cl.: G02B 6/44

(54) **Splice tray rack and cabinet for fiber optic cables**
Gerüst für Spleissträger und Gehäuse für optische Kabel
Rack des plateaux pour des jonctions et armoire pour des câbles fibre-optiques

(30) Priority: 16.04.1993 US 49055
(43) Date of publication of application: 19.10.1994
(73) Proprietor: THE WHITAKER CORPORATION, Wilmington, Delaware 19808 (US)
(72) Inventor: Bruckner, Carl Michael, Washington, Pennsylvania 15301 (US); Calhoun III, Edward Ervin, Washington, Pennsylvania 17552 (US); Fasnacht, Matthew Jon, Mount Joy, Pennsylvania 17552 (US); Schaffer, Ronald Richard, Harrisburg, Pennsylvania 17109 (US); Shay, Francis Joseph, Palmyra, Pennsylvania 17078 (US)
(74) Representative: Warren, Keith Stanley

(56) References cited:
- EP-A- 0 392 935
- WO-A-91/10927
- DE-A- 4 207 531

## Description

The present invention relates to a cabinet for holding splice trays having spliced optical fibers therein.

It is often necessary to splice the ends of optical fibers from one fiber optic cable to corresponding ends of optical fibers from another fiber optic cable. This is accomplished by "breaking-out" a portion of each of the fiber optic cables, whereby the optical fibers therein are exposed by stripping the protective jacket from the fiber optic cable. The corresponding optical fibers are then spliced together using various techniques, such as fusion splicing or mechanical splicing.

A loop that includes the splice is coiled in the spliced optical fibers. This loop is placed within a protective splice tray. These splice trays may be as simple as a rectangular tubular member having two opposing and open sides through which the optical fibers pass. More than one of these spliced loops may be placed within the same splice tray.

In large fiber optic systems, such as telecommunication systems, many optical fibers must be spliced together and these fibers may originate from multiple fiber optic cables. To contain all of these loops, multiple splice trays are required. In order to provide organization and protection for the splices, while still allowing for convenient access to the optical fibers, the splice trays are held in a splice tray rack within a splice tray cabinet.

What is needed is a splice tray rack for holding numerous splice trays of various configurations while permitting easy insertion and withdrawal of the splice trays and the optical fibers therein. What is further required is a fiber optic cable management cabinet that can hold the splice tray rack, the optical fibers of the fiber optic cables and the fiber optical cables themselves in a manner that routes the optical fibers within the cabinet as required and isolates the optical fibers from disturbances of the fiber optic cable.

W091/10927 describes adaptive racking and distribution frame systems for handling optical fiber cables and including racking sections with wall portions that can be replaced without removing the section or displacing cables in the section and further including housings with moveable shelves that can be adapted to hold optical fiber splices, optical fiber connectors or optical fiber spools. DE-A-4207531 describes a selectively positionable work tray for use with an optical fiber cable management cabinet.

It is an object of this invention to provide a cabinet in which splice trays are held in an easily accessible and organized manner. It is another object of this invention to minimize external stresses on the optical fibers within the cabinet and route those fibers within the cabinet interior.

The present invention consists in a fiber optic splice cabinet for encasing the break-out ends of fiber optic cables, each of the fiber optic cables having a plurality of optical fibers within an inner jacket that correspond to optical fibers of another fiber optic cable and cable strength members surrounded by a protective outer jacket, where the corresponding optical fibers are spliced together and placed in a splice tray, the fiber optic splice cabinet comprising a box-like fiber optic cable management cabinet having a plurality of connected sides defining a cabinet interior, a plurality of access ports within at least one of the sides, each port constructed to pass the break-out end of one of the fiber optic cables into the cabinet interior, a tie-down bar attached to the cable management cabinet within the cabinet interior and located adjacent to the access port so the fiber optic cable can pass thereover, for individually securing the protective outer jacket, the inner jacket and the strength member thereto, and an optical fiber splice tray rack for holding a plurality of optical fiber splice trays within the cabinet interior, having a back panel attached to the cable management cabinet, a plurality of shelves attached to the back panel, each shelf having a support surface extending from the back panel to a lip that projects from the support surface opposite the back panel to define a tray receiving region for receiving one of the splice trays, the fiber optic splice cabinet being characterized in that a resilient member is provided for acting generally parallel to the support surface of each shelf to bias the tray against the lip for holding the splice tray within the tray receiving region.

It is a feature of this invention to have a plurality of optical fiber bend radius limiters within the cable management cabinet for preventing directional changes from critically approaching the minimum bend radius of the fiber while routing the optical fibers around the cabinet interior. It is yet another feature of this invention to have a work tray that is selectively positionable adjacent one of the shelves so that the respective splice tray may be placed thereupon.

It is an advantage of this invention that extending the lip opposite the back panel expands the tray receiving region to accommodate stacked splice trays. It is another advantage of this invention that the splice tray rack can accommodate various splice tray sizes and configurations. It is yet another advantage of this invention that an elastic sponge may be used as the resilient member and the deformation of the sponge further holds the trays in place by deforming around at least a portion of a side of the splice tray. It is a further advantage of this invention that a grounding member of the fiber optic cable may be attached to the tie-down bar, thereby grounding the fiber optic cable to the cabinet. It is a still further advantage of this invention that the protective outer jacket, the inner jacket, the cable strength members and the ground member of the cable may be all attached to the same tie-down bar to ease installation. It is yet another advantage of this invention that a selectively positionable work tray is storable within the fiber optic cable management cabinet and folds to a horizontal position to provide a work surface at the desired location.

An embodiment of the present invention will now be described by way of example with reference to the accompanying drawings in which:
FIG. 1 is a partially cut-away perspective view of a splice tray cabinet.
FIG. 2 is a cross-sectional view of a portion of a splice tray rack.
FIG. 3 is a perspective view of a portion of the splice tray cabinet of FIG. 1 showing the fiber optic cables attached to the tie-down bar within the splice tray cabinet.

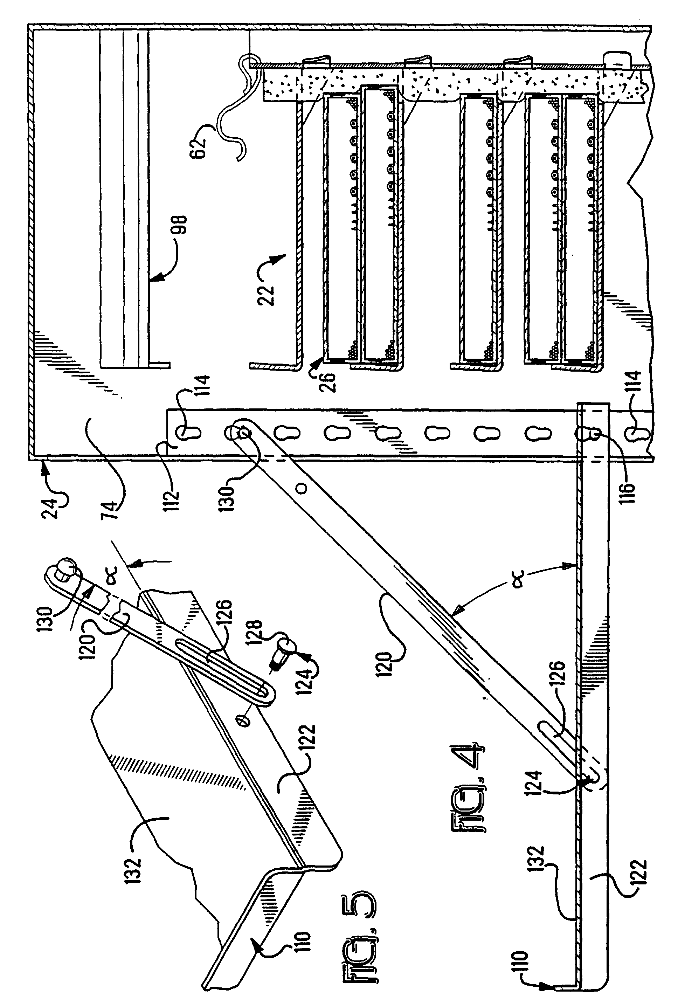

FIG. 4 is a side view of a splice tray cabinet with a work tray extending from the cabinet interior.
FIG. 5 is a partially cut-away perspective view of the work tray.

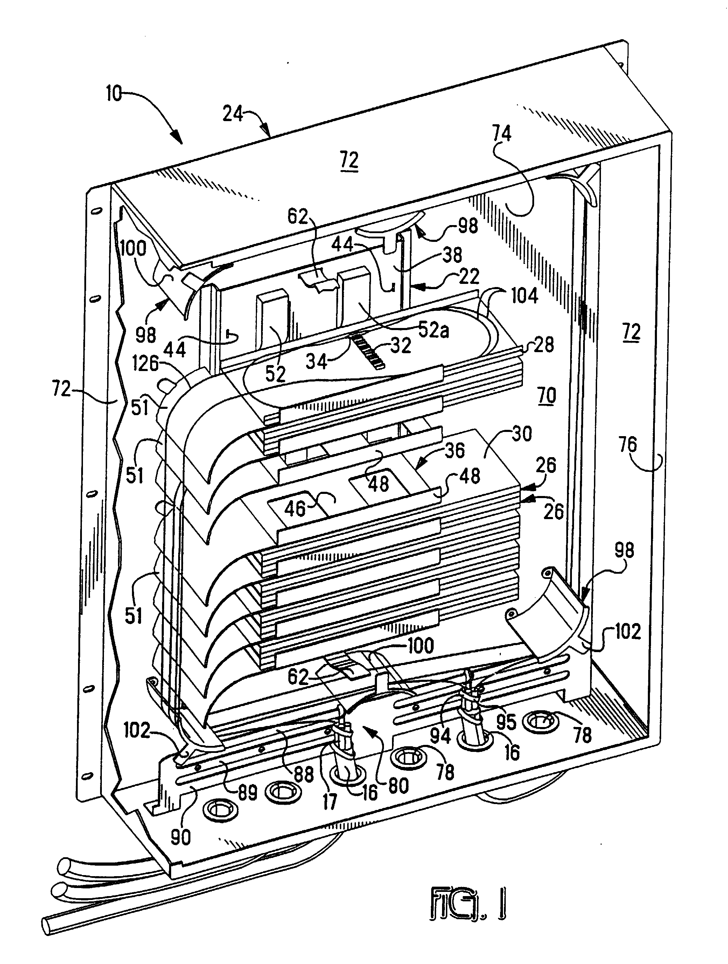

FIG. 1 shows a splice tray cabinet 10 for organizing and protecting spliced together corresponding optical fibers 12a,12b that have been "broken-out" of a fiber optic cable 14. The fiber optic cable 14 has a protective outer jacket 16 surrounding an inner jacket 17 containing optical fibers 12, cable strength members 18, and a cable grounding member 20. It is not unusual for a fiber optic cable 14 to include 144 or more optical fibers 12. The "breaking-out" process involves stripping a portion of the protective jacket 16, usually around one--three meters, from the fiber optic cable 14 to provide access to the components of the cable 14.

The splice tray cabinet 10 includes a splice tray rack 22 within a fiber optic cable management cabinet 24. The splice tray rack 22 is constructed to hold numerous splice trays 26. The splice trays 26 are constructed to encompass the spliced together optical fibers 12a,12b. In their most general form, the splice trays 26 have a bottom 28 and a lid 30 that form a rectangular, open-ended tube-like structure so that the optical fibers 12a,12b may pass through. Clips 32 for maintaining the position of the splices 34 within the splice trays 26 are attached to the bottom 28 of the splice tray 26.

The splice tray rack 22 has a plurality of shelves 36 attached to a back panel 38. The shelves 36 are attached by deformable tabs 40 on the shelf 36 extending from a support gusset 41. A portion of each deformable tab 42 extends through one of a number of slots 44 in the back panel 38 and is deformed, thereby positively captivating the shelf 36 to the back panel 38. This enables the shelves 36 to be repositioned by straightening the deformed portion of the tab 42, removing the shelf 36 from the back panel 38, inserting the tab 40 into another slot 44 and deforming the tab 40, whereby the shelf 36 is positioned in another location on the back panel 38. The shelves 36 could also be attached to the back panel 38 by adhesive, welding or other mechanical means, that may or may not enable removal and repositioning of the shelf 36.

Each shelf 36 has a support surface 46 that extends from the back panel 38 to a lip 48 projecting from the support surface 46 generally opposite the back panel 38, whereby a tray receiving region 50 for receiving the splice tray 26 is defined. The support surface 46 may be extended along the splice tray 26 to a bend radius 51. This bend radius 51 extends beyond the splice tray 26 in a direction that corresponds to the routing of the optical fibers, as discussed below.

The splice tray 26 is held in the tray receiving region 50 by a resilient member 52 acting generally parallel to the support surface 46. Individual resilient members 52, attached either to the back panel 38 or the lip 48, could be used for each shelf 36. A particularly advantageous resilient member 52 is an elastic foam sponge 52. In order to prevent pivoting of the splice tray 26 within the tray receiving region 50, two sponges 52,52a are used. The sponges 52,52a extend along the back panel 38 from above the first self 36a to below the last shelf 36b, passing through cutouts 54,54a in each of the shelves 36. When the splice tray 26 is positioned within the tray receiving region 50 the sponges 52,52a undergo local deformation along the end of the splice tray 56 and exerts a force on the splice tray 26 that pushes the splice tray 36 against the lip 48, thereby holding the splice tray 36 in place.

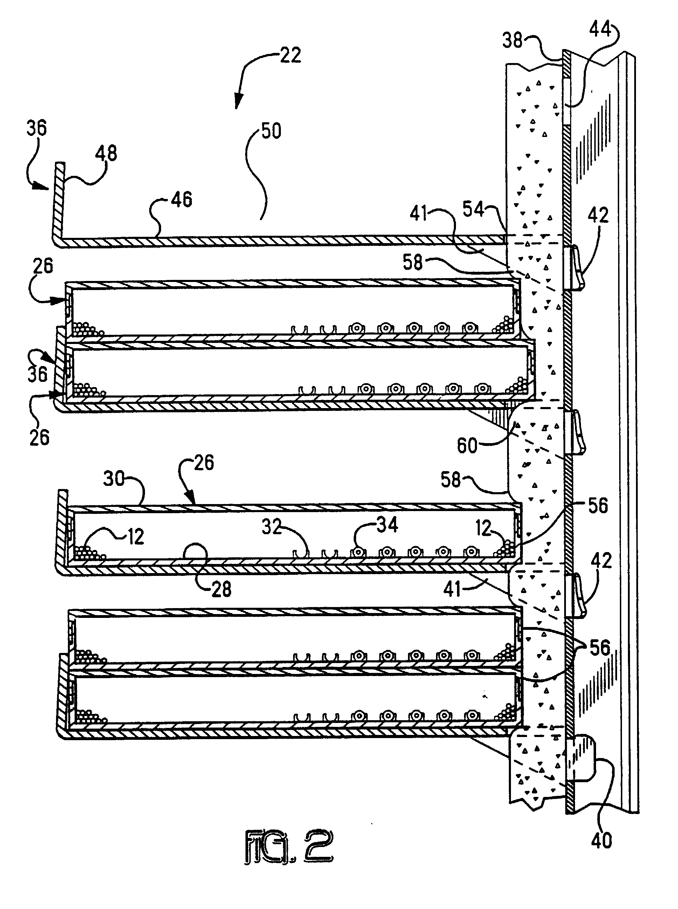

As shown in FIG. 2, it is possible to expand the tray receiving region 50 to accommodate multiple splice trays 26 stacked on top of each other. This is accomplished by extending the lip 48 from the support surface 46 a sufficient distance to engage multiple splice trays 26 stacked on top of each other or single splice trays 26. In conjunction with the local deformation that the resilient member 52 can sustain, the splice tray rack 22 can accommodate splice trays 26 of differing sizes, even within the same stack of splice trays 26.

The sponges 52,52a extend along the back panel 38 and are locally deformed upon placement of the splice tray 26 within the tray receiving region 50. The local deformation produces an upper bulge 58 and a lower bulge 60. These bulges 58,60 overlie and underlie at least a portion of the splice tray 26 stack, thereby further maintaining the splice trays 26 within the tray receiving region 50.

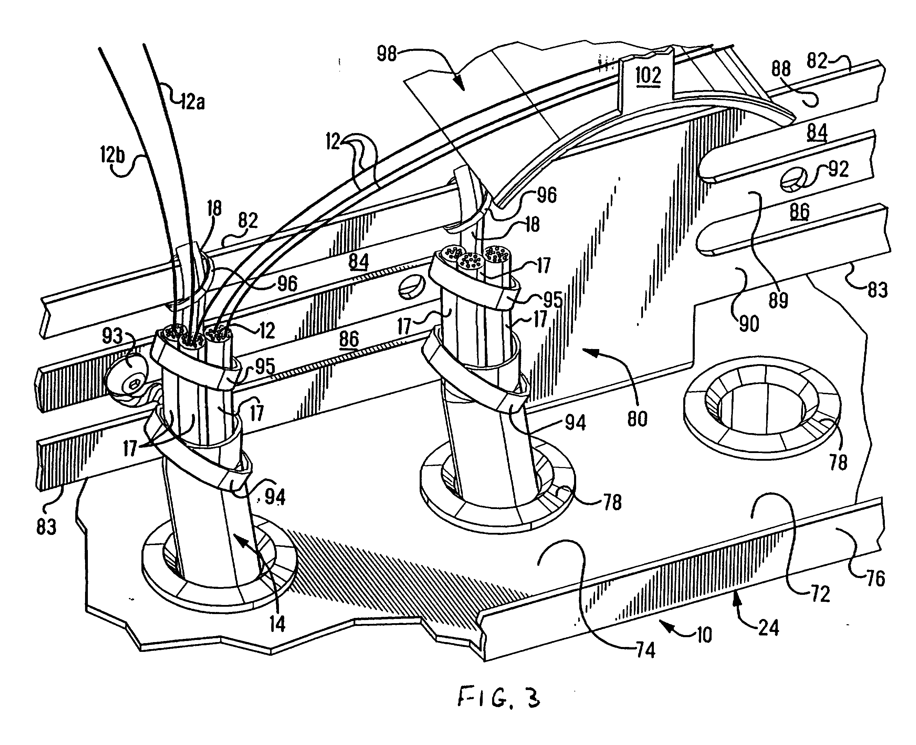

A safety strap 62, shown partially cut away in FIGS. 1 and 3, is incorporated into the splice tray rack 22 for over-wrapping the splice trays 26 in the splice tray rack 26. The function of the safety strap 62 is to prevent inadvertent dislodging of the splice trays 26. The safety strap 62 extends between a top slot 64 and a bottom slot (not shown) in the back panel 38, thereby encompassing the splice trays 26. The strap 62 is releasable to provide access to the splice trays 26.

The splice tray cabinet 10 has the splice tray rack 22 incorporated into a fiber optic cable management cabinet 24. The fiber optic cable management cabinet 24 is an open-faced box-like cabinet that has a back side 70 and a plurality of connected perimeter sides 72 extending therefrom to define a cabinet interior 74. In order to protect the cabinet interior 74, a removable front side 76, that generally opposes the back side 70, is connected to the perimeter sides 72. This front side 76 may be a hinged door, a removable panel, or any other configuration that will provide access to the cabinet interior 74.

The fiber optic cable 14 passes into the cabinet interior 74 through an access port 78 in one of the cabinet sides 72. Ideally, the access port 78 is constructed to provide an environmental seal about the protective outer jacket 16 of the fiber optic cable 14 to prevent moisture and contaminants from entering the cabinet 24.

A tie-down bar 80 is fixed to the cabinet 24, within the cabinet interior 74 and adjacent to the access port 78, so that the fiber optic cable 14 entering the cabinet interior 74 passes without interference. The tie-down bar 80 has a first side 82, a second side 83, an upper slot 84 and a lower slot 86 that define an upper cross member 88, a middle cross member 89 and a lower cross member 90. Holes 92 are included in the lower cross member 90 for attaching the grounding member 20 of the fiber optic cable 14 to the tie-down bar 80 in order to ground the cable 14 to the cabinet 24. These holes 92 may be tapped for use with a screw 94.

When the fiber optic cable 14 enters the cabinet interior 74 it crosses the tie-down bar 80 along a path that is essentially perpendicular to the cross members 88,90. Once inside the cabinet interior 74, the fiber optic cable 14 is "broken-out" by stripping the protective outer jacket 16 to slightly above the access port 78. A first cinch 94 is wrapped around the cable 14 and lower cross member 90 securing the cable 14 to the tie-down bar 80. A second cinch 95 is wrapped around the inner jacket 17 and the middle cross member 89 for securing to the tie-down bar 80. The strength members 18 are secured thereto by a third cinch 96 that wraps around both the strength members 18 and the upper cross member 88. These cinches 94,95,96 may be conventional cable ties or more complicated clamps may be incorporated into the tie-down bar 80. Any excess length of the strength members 18 and the inner jacket 17 is trimmed as required.

In FIG. 1 and Fig. 3 for clarity of the drawings, a spliced optical fiber 12a,12b is used as an representative example of the many optical fibers 12 that would actually be within the cabinet interior 74. The optical fibers 12a,12b are routed within the cabinet interior 74 by optical fiber bend radius limiters 98 that extend into the cabinet interior 74 from the back side 70 of the cabinet 24. These bend radius limiters 98 have an radial section 100 for supporting the optical fiber 12a,12b. An ear 102 extends radially out from the radial section 100 for preventing the large number of optical fibers 12 wrapped therearound from coming off the radial section 100. Through the use of these bend radius limiters 98, the optical fibers 12 from the fiber optic cables 14 are routed about the cabinet interior 74 along paths that do not approach the critical minimum bend radius of the optical fiber 12. The radius of the radial sections 100 shown is approximately two inches.

The corresponding optical fibers 12a,12b that are to be spliced together are routed around the cabinet interior 74 to their respective splice tray 26. The radial extension 51 of the shelf 36 prevents any bend from forming in the optical fibers 12a,12b where they enter the splice trays 26 from approaching the critical bend radius of the optical fiber 12, as described for the bend radius limiters 98. A loop 104 of at least one complete circle is formed with the corresponding optical fibers 12a,12b and a splice 34 created where the corresponding optical fibers 12a,12b are joined. This loop 104, including the associated splice 34, is placed within the bottom 28 of the splice tray 26. The splice 34 may be placed within a clip 32 in the bottom 28 of the splice tray 26 in order to position the splice 34 therein.

When the particular splice tray 26 is full, the splice tray 26 is assembled by putting the lid 30 on the bottom 28. The splice tray 26 can then be positioned within the tray receiving region 50 of the appropriate shelf 26. This process is repeated until the splice tray rack 22 is full. The fiber optic cable management cabinet 24 may include a number of splice tray racks 22 if desired.

In order to aid working on the optical fibers 12 a selectively positionable work tray 110 is included in the fiber optic cable management cabinet 24. This work tray 110 may be attached to the cabinet 24 at various locations that correspond to the shelves 36 of the splice tray rack 22. Opposing positioners 112,112a are attached to the cabinet 24 within the cabinet interior 74. These positioners 112 have multiple key holes 114 for receiving and captivating a positioning pin 116 attached to each rear corner 118 of the work tray 110 in order to position the work tray 110 in the desired location. The key holes 114 are constructed so that the positioning pin 116 may be inserted and removed as required to reposition the work tray 110.

Work tray support arms 120 are slidably captivated to the work tray 110 along the sides 122 of the work tray 110 by a shoulder pin 124 that passes through a slot 126 in the support arm 120 and is fixed to the work tray 110, thereby captivating the support arm 120 between the head 128 of the shoulder pin 126 and the work tray 110. The support arms 120 also have a positioning pin 130 incorporated along the support arm 120 opposite the slot 120. This positioning pin 130 is received in one of the keys 114 of the positioner 112 in the same manner as the positioning pins 116 of the work tray 110. The support arms 120 may assume different angular positions a with the work surface 132 of the work tray 110 in order to cover all the desired tray locations. The support arms 120 may assume a hanging relationship, as shown in FIG. where the work tray 110 hangs below the support arms 120, or a supporting relationship, where the work tray 110 is above the support arms 120, whereby the work tray 110 is supported outward from the cabinet 24 in an essentially horizontal manner. By disengaging the positioning pin 130 of the support arms from the key holes 114 of the positioner 112, the work tray 110 may be tilted up or down into the cabinet interior 74. A latch may be provided to keep the work tray 110 in an upright or vertical position within the cabinet 24.

## Claims

1. A fiber optic splice cabinet (10) for encasing the break-out ends (12a, 12b) of fiber optic cables (14), each of the fiber optic cables having a plurality of optical fibers (12) within an inner jacket that correspond to optical fibers of another fiber optic cable and cable strength members (18) surrounded by a protective outer jacket (16), where the corresponding optical fibers are spliced together and placed in a splice tray (26), the fiber optic splice cabinet (10) comprising;
a box-like fiber optic cable management cabinet (24) having
a plurality of connected sides (70, 72) defining a cabinet interior (74);
a plurality of access ports (78) within at least one of the sides, each port constructed to pass the break-out end of one of the fiber optic cables into the cabinet interior;
a tie-down bar (80) attached to the cable management cabinet (24) within the cabinet interior (74) and located adjacent to the access port so the fiber optic cable can pass thereover, for individually securing the protective outer jacket (16), the inner jacket and the strength member (18) thereto; and
an optical fiber splice tray rack (22) for holding a plurality of optical fiber splice trays (26) within the cabinet interior (74), having
a back panel (38) attached to the cable management cabinet (24);
a plurality of shelves (36) attached to the back panel (38), each shelf (36) having a support surface (46) extending from the back panel to a lip (48) that projects from the support surface opposite the back panel to define a tray receiving region (50) for receiving one of the splice trays, the fiber optic splice cabinet being characterized in that:
a resilient member (52) is provided for acting generally parallel to the support surface (46) of each shelf to bias the tray against the lip (48) for holding the splice tray within the tray receiving region.

2. A fiber optic splice cabinet of Claim 1, wherein the cable management cabinet (24) includes a plurality of optical fiber bend radius limiters (98) having an arcuate member (100) with a radius larger than the cabinet interior (74) for routing the optical fibers, whereby directional changes in the optical fiber route occurring along the optical fibers bend radius limiters (98) take place through radii larger than the minimum critical radius of the optical fiber.

3. A fiber optic splice tray cabinet of Claim lor 2, wherein the cable management cabinet has a selectively positionable work tray (110) that is positionable to coincide approximately with the shelf (36) and extend horizontally from the cabinet interior (74), whereby a generally horizontal work tray (110) may be provided at each shelf (36).

4. A fiber optic splice tray cabinet of Claim 1, 2 or 3, wherein each shelf (36) of the splice tray rack (22) has a bent portion (51) extending from the support surface (46) to support the optical fibers as they enter the splice tray.

5. A fiber optic splice tray cabinet of Claim 1, 2,3 or 4, wherein the resilient member comprises a plurality of elastic foam sponges (52).

## Patentansprüche

1. Lichtwellenleiterspleißschrank (10) zum Umschließen der Abzweigenden (12a, 12b) von Lichtwellenleiterkabeln (14), wobei jedes der Lichtwellenleiterkabel innerhalb eines Innenmantels mehrere, den Lichtwellenleitern eines anderen Lichtwellenleiterkabels entsprechende Lichtwellenleiter (12) und von einem schützenden Außenmantel (16) umgebene Kabelfestigkeitsglieder (18) aufweist, wobei die entsprechenden Lichtwellenleiter zusammengespleißt sind und in einer Spleißwanne (26) plaziert sind, wobei der Lichtwellenleiterspleißschrank (10) folgendes umfaßt:
einen kastenartigen Lichtwellenleiterkabelverteilerschrank (24) mit
mehreren verbundenen Seiten (70, 72), die ein Schrankinneres (74) definieren;
mehreren Zugangskanälen (78) innerhalb mindestens einer der Seiten, wobei jeder Kanal so konstruiert ist, daß er das Abzweigende eines der Lichtwellenleiterkabel in das Kabelinnere führt;
eine an dem Kabelverteilerschrank (24) innerhalb des Kabelinneren (74) angebrachte Festbindstange (80), die neben dem Zugangskanal liegt, so daß das Lichtwellenleiterkabel darübergeführt werden kann, um den schützenden Außenmantel (16), den Innenmantel und das Festigkeitsglied (18) einzeln daran zu befestigen; und
ein Lichtwellenleiterspleißwannengestell (22) zum Halten von mehreren Lichtwellenleiterspleißwannen (26) innerhalb des Schrankinneren (74), mit
einer an dem Kabelverteilerschrank (24) angebrachten Rückwand (38);
mehreren an der Rückwand (38) angebrachten Einsätzen (36), wobei jeder Einsatz (36) eine Stützfläche (46) aufweist, die sich von der Rückwand zu einer Lippe (48), die von der Stützfläche aus gegenüber der Rückwand vorspringt, erstreckt, um ein Wannenaufnahmegebiet (50) zur Aufnahme einer der Spleißwannen zu definieren, wobei der Lichtwellenleiterspleißschrank
dadurch gekennzeichnet ist, daß
ein elastisches Glied (52) vorgesehen ist, um allgemein parallel zu der Stützfläche (46) jedes Einsatzes zu wirken, um die Wanne gegen die Lippe (48) vorzuspannen, damit die Spleißwanne innerhalb des Wannenaufnahmegebiets gehalten wird.

2. Lichtwellenleiterspleißschrank nach Anspruch 1, bei dem der Kabelverteilerschrank (24) mehrere Lichtwellenleiterbiegungsradiusbegrenzer (98) mit einem bogenförmigen Glied (100) mit einem Radius aufweist, der größer ist als der kritische Radius des innerhalb des Schrankinneren (74) installierten Lichtwellenleiters, zum Führen der Lichtwellenleiter, wobei entlang den Lichtwellenleiterbiegungsradiusbegrenzern (98) auftretende Richtungsänderungen in dem Weg des Lichtwellenleiters über Radien stattfinden, die größer sind als der kleinste kritische Radius des Lichtwellenleiters.

3. Lichtwellenleiterspleißwannenschrank nach Anspruch 1 oder 2, bei dem der Kabelverteilerschrank eine selektiv positionierbare Arbeitswanne (110) aufweist, die so positioniert werden kann, daß sie etwa mit dem Einsatz (36) übereinstimmt und sich von dem Schrankinneren (74) aus horizontal erstreckt, wodurch bei jedem Einsatz (36) eine allgemein horizontale Arbeitswanne (110) vorgesehen werden kann.

4. Lichtwellenleiterspleißwannenschrank nach Anspruch 1, 2 oder 3, bei dem jeder Einsatz (36) des Spleißwannengestells (22) einen sich von der Stützfläche (46) aus erstreckenden gebogenen Teil (51) zum Stützen der Lichtwellenleiter bei ihrem Eintritt in die Spleißwanne aufweist.

5. Lichtwellenleiterspleißwannenschrank nach Anspruch 1, 2, 3 oder 4, bei dem das elastische Glied aus mehreren elastischen Schaumschwämmen (52) besteht.

## Revendications

1. Armoire (10) pour raccords de fibres optiques destinée à enfermer les extrémités de sortie (12a, 12b) de câbles à fibres optiques (14), chacun des câbles à fibres optiques présentant une pluralité de fibres optiques (12) au sein d'une gaine intérieure correspondant à des fibres optiques d'un autre câble à fibres optiques et des éléments (18) de renforcement de câble entourés d'une gaine protectrice extérieure (16), les fibres optiques correspondantes étant raccordées ensemble et placées dans un plateau (26) pour raccords, l'armoire (10) pour raccords de fibres optiques comprenant:
une armoire (24) de gestion de câbles à fibres optiques de type coffret présentant
une pluralité de côtés connectés (70, 72) définissant un intérieur (74) de l'armoire;
une pluralité de points d'accès (78) dans l'un au moins des côtés, chaque point étant conçu pour laisser passer l'extrémité de sortie d'un des câbles à fibres optiques dans l'intérieur de l'armoire;
une barre d'attache (80) fixée à l'armoire (24) de gestion de câbles dans l'intérieur (74) de l'armoire et adjacente au point d'accès de façon à ce que le câble à fibres optiques puisse passer par-dessus, pour y assujettir individuellement la gaine protectrice extérieure (16), la gaine intérieure et l'élément de renforcement (18); et
un bâti (22) à plateaux pour raccords de fibres optiques destiné à contenir une pluralité de plateaux (26) pour raccords de fibres optiques dans l'intérieur (74) de l'armoire, présentant
un panneau arrière (38) fixé à l'armoire (24) de gestion de câbles;
une pluralité de tablettes (36) fixées au panneau arrière (38), chaque tablette (36) présentant une surface de support (46) se prolongeant depuis le panneau arrière jusqu'à un rebord (48) qui fait saillie depuis la surface de support opposée au panneau arrière pour définir une région (50) de réception de plateau destinée à recevoir l'un des plateaux pour raccords, l'armoire pour raccords de fibres optiques étant caractérisée en ce que:
un élément résilient (52) est prévu pour agir généralement parallèlement à la surface de support (46) de chaque tablette afin de pousser le plateau contre le rebord (48) en vue de maintenir le plateau pour raccords dans la région de réception de plateau.

2. Armoire pour raccords de fibres optiques selon la revendication 1, dans laquelle l'armoire (24) de gestion de câbles comporte une pluralité de limiteurs (98) du rayon de courbure des fibres optiques présentant un élément arqué (100) dont le rayon est supérieur au rayon critique de la fibre optique montée dans l'intérieur (74) de l'armoire, en vue d'acheminer les fibres optiques, de sorte que des changements de direction du chemin des fibres optiques se produisant le long des limiteurs (98) du rayon de courbure des fibres optiques aient lieu suivant des rayons supérieurs au rayon critique minimal de la fibre optique.

3. Armoire à plateaux pour raccords de fibres optiques selon la revendication 1 ou 2, dans laquelle l'armoire de gestion de câbles présente un plateau de travail (110) positionnable de façon sélective, qui est positionnable de manière à coïncider approximativement avec la tablette (36) et à se prolonger horizontalement par rapport à l'intérieur (74) de l'armoire, un plateau de travail (110) généralement horizontal pouvant ainsi être fourni au niveau de chaque tablette (36).

4. Armoire à plateaux pour raccords de fibres optiques selon la revendication 1, 2 ou 3, dans laquelle chaque tablette (36) du bâti (22) à plateaux pour raccords présente une partie courbée (51) se prolongeant depuis la surface de support (46) pour supporter les fibres optiques lorsqu'elles entrent dans le plateau de raccords.

5. Armoire à plateaux pour raccords de fibres optiques selon la revendication 1, 2, 3 ou 4, dans laquelle l'élément résilient comprend une pluralité d'éponges alvéolaires élastiques (52).
